# EUROPEAN PATENT APPLICATION

(11) **EP 2 579 593 A1**
(43) Date of publication of application: **10.04.2013**
(21) Application number: 11306283.0
(22) Date of filing: 04.10.2011
(51) Int. Cl.: H04N 7/26, H04N 7/50

(54) **Adaptive quantisation for intra-encoded image blocks**

(71) Applicant: Thomson Licensing, 92130 Issy-les-Moulineaux (FR)
(72) Inventor: Chevance, Christophe, 35530 Brécé (FR); Salmon, Philippe, 35250 St. Sulpice-La-Forët (FR); Yannick, Oliver, 35235 Thorigne Fouillard (FR)
(74) Representative: Streit, Arend

(57) **Abstract**

Said method comprises using a processing means for quantizing a transform of a residual of an intra-prediction of the image block using a quantization parameter value and encoding the quantized transform, further using a processing means for determining that an already used quantization parameter value and corresponding coding cost are available in a storage means, the already used a quantization parameter value being already used for quantizing of a further image block close resembling the image block or having a same complexity as the image block and using the already used quantization parameter value, the corresponding coding cost and a target bit rate for determining the quantization parameter value.

Thus, the quantization parameter value can be determined such that flickering artifacts are avoided.

## Description

### TECHNICAL FIELD

The invention is made in the field of intra-encoding of image blocks.

### BACKGROUND OF THE INVENTION

In high definition (HD) applications such as Wireless High-Definition Multimedia Interface (wHDMI) application for instance, temporal prediction has been found as not too beneficial in terms of coding efficiency due to the vividness of content. At the same time, temporal prediction requires higher complexity of encoder and/or decoder and hinders random access. Therefore, intra-only encoders/decoders are used in many HD applications (e.g. H264 High 444 Intra Profile) as they offer a good compromise between encoder/decoder complexity, random accessibility, coding cost and visual quality.

Encoding in general comprises prediction, transformation, and quantization wherein a quantization step size of quantization can be controlled by a quantization parameter. Quantization can be used to control coding costs such that, in average over some or all images, distortion is minimized while coding cost per image is compliant with a target bit rate in that it does not exceed the target bit rate. Coding cost of an image highly depends on the complexity of the content depicted in the image.

He Z. et al. describe in: "Optimum bit allocation and accurate rate control for video coding via p-domain source modeling", IEEE TRANS. On Circuits and Systems for Video technology, Oct 2002, Vol. 12:10, p. 840-849, that there is a linear relationship between coding cost and the percentage of zeros among the quantized transform coefficients. This linear relationship also involves a content dependent parameter.

### SUMMARY OF THE INVENTION

Due to the dependency of coding cost on image content, a smallest quantization parameter value still compliant with the target bit rate can be determined only for image blocks individually wherein image blocks refer to square or rectangular blocks of image pixels, macro blocks composed of two or more such blocks of image pixels or entire images. That is, for image blocks with content of varying complexity the smallest compliant quantization parameter value varies over the image blocks.

But, the inventors recognized that image blocks of same vividness or complexity, in particular image blocks of close resemblance, share a same smallest compliant quantization parameter value.

Thus, in case content between image blocks does not change much or does not change at all, e.g. the image blocks depict, entirely or partly, a same still image, a same computer graphic interface or web site with a changed mouse point position or only slightly changed text editors where only some character has been added, a smallest compliant quantization parameter value can be determined using one or some image blocks of close resemblance. Then, the determined smallest compliant quantization parameter value can be used for all other image blocks of close resemblance.

Use of this smallest compliant quantization parameter value for all other image blocks of close resemblance ensures that all other image blocks being encoded with coding cost below the target bit rate and in a same quality which is in particular of interest for image blocks of close resemblance. For image blocks of close resemblance, use of varying quantization parameter values results in highly salient flickering artifacts.

For avoidance of such artifacts, i.e. for the purpose of computing the quantization step such that coding cost at picture level is compliant to a target bit rate while visual quality is optimized, it is proposed a method according to claim 1 for intra-encoding of an image block.

Said method comprises using a processing means for quantizing a transform of a residual of an intra-prediction of the image block using a quantization parameter value and encoding the quantized transform. Said method also comprises further using the processing means for determining that an already used quantization parameter value and corresponding coding cost are available in a storage means, the already used a quantization parameter value being already used for quantizing of a further image block close having a same complexity as the image block and using the already used quantization parameter value, the corresponding coding cost and a target bit rate for determining the quantization parameter value.

Use of the already used quantization parameter value and the corresponding coding cost for determining the quantization parameter value allows for determining a same or only slightly changed quantization parameter value for avoiding flickering artifacts.

A further proposed device for intra-encoding of an image block comprises quantizing means for quantization of a transform of a residual of an intra-prediction of the image block using a quantization parameter value and encoding means for encoding the quantized transform. The device further comprises storage means for storing an already used quantization parameter value and corresponding coding cost, the already used a quantization parameter value being already used for quantizing of at least one further image block close resembling the image block or having a same complexity as the image block, and determining means for determining that the already used quantization parameter value and corresponding coding cost are stored. Furthermore the device comprises processing means adapted for using the already used quantization parameter value, the corresponding coding cost and a target bit rate for determining the quantization parameter value.

In an embodiment, the storage means are adapted for storing a further already used quantization parameter value and corresponding further coding cost, the processing means being adapted for further using the further already used quantization parameter value and the further corresponding coding cost for determining the quantization parameter value.

It is further proposed a non-transitory storage medium having stored thereon intra-encoded image blocks intra-encoded according to the method proposed.

And it is proposed a use of a processing device for decoding intra-encoded image blocks intra-encoded according to the method proposed.

In further embodiment of the device, an output constant bit rate can be reached with stuffing bits unused for the decoding.

The proposed embodiments allow for freezing the quantization parameter value during the encoding of closely resembling image blocks once it is known a smallest compliant quantization parameter value which causes, per image, coding cost not exceeding the target bit rate and for which is known that a next smaller quantization parameter value would cause coding cost exceeding the target bit rate. Thus, the quality of the decoded pictures is very stable once quantization is frozen because quantization of the closely resembling images does not change during the time.

### BRIEF DESCRIPTION OF THE DRAWINGS

Exemplary embodiments of the invention are illustrated in the drawings and are explained in more detail in the following description. The exemplary embodiments are explained only for elucidating the invention, but not for limiting the invention's disclosure or scope defined in the claims.

In the figures:
- Fig. 1: depicts a flow chart of an exemplary embodiment of the invention, and
- Fig. 2: depicts a flow chart of a further exemplary embodiment of the invention.

### EXEMPLARY EMBODIMENTS OF THE INVENTION

The invention may be realized on any electronic device comprising a processing device correspondingly adapted. For instance, the invention may be realized in a television, a mobile phone, a personal computer, a digital still camera, a digital video camera or a car entertainment system.

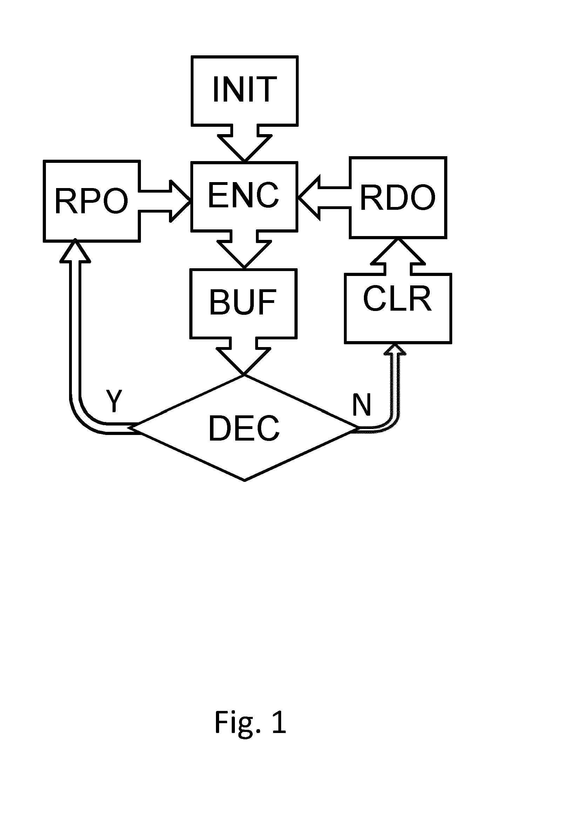

In an exemplary embodiment of the invention a flow chart thereof being depicted in fig. 1, closely resembling images are comprised as a contiguous sequence within a larger sequence of images of not necessarily close resemblance. The encoding of larger sequence is initiated in step INIT with a target bit rate and an initial value for a variable, integer-valued quantization parameter varied in order to meet, in average over the encoded images, the target bit rate.

In this exemplary embodiment, a processing device with an encoder comprised therein is used for executing the step ENC of encoding of an image block of a current image wherein encoding comprises quantization of a transform of a residual of an intra-prediction of the image block using a quantization parameter value. The quantization parameter value used and the coding cost resultant from this encoding are used in step BUF for updating a storage means. In case it is determined in a decision step DEC that a corresponding image block does not resemble the image block closely, the corresponding image block being of same size and shape as the image block and being located at a same position in an image to-be-encoded-next, the storage means is cleared in step CLR and a quantization parameter value for encoding of the corresponding image block of the image to-be-encoded-next is determined in step RDO according to prior art rate control.

This detecting step DEC can comprise, for instance, pixelwise comparison of the image block of the first image with the corresponding image block of the successive image wherein the corresponding image block of the successive image having at least a certain number of identical pixels with the image block of the first image is considered closely resembling said image block of the first image. Or, sum of absolute difference between the image blocks is used together with a threshold for the detecting step.

For the image blocks of close resemblance, the encoder applies in step RPO a new rate control according to the invention.

In step RPO the quantization parameter values and coding costs in the storage means are used.

The storage means is configured such that it is emptied once a contiguous sequence of closely resembling image blocks ended.

For a current sequence of close resemblance, there are up to three different phases in dependence on a storage status of the storage means.

In an initial phase, there is stored only one coding cost and one associated quantization parameter value. Rate control during the initial phase can be constrained such that, in case the stored coding cost is target bit rate compliant, a quantization parameter value is used for a closely resembling and corresponding image block in an image to-be-encoded-next which is smaller than the stored quantization parameter value. And in case the stored coding cost is target bit rate incompliant, a quantization parameter value is used which larger than the stored quantization parameter value. In the initial phase, quantization parameter value change can be by one or dependent on the stored coding cost and the target bit rate.

In an optional intermediate phase, two different coding costs, one compliant with the target bit rate and the other incompliant with the target bit rate, and two associated quantization parameter values are stored wherein the stored different quantization parameter values differ by more than One. Rate control during the optional intermediate phase can be constrained such that, for quantization of the closely resembling corresponding image block in the image to-be-encoded-next, a quantization parameter value is used which is smaller than the stored quantization parameter value with compliant coding cost and larger than the stored quantization parameter value with incompliant coding cost. In the optional intermediate phase, quantization parameter value change can be by one. Or, quantization parameter value change in the optional intermediate phase can depend on a difference between the stored quantization parameter values. Alternatively or additionally, quantization parameter value change in the optional intermediate phase can depend on differences between the stored coding costs and the target bit rate.

In a final phase, there are still stored two different coding costs, one compliant and the other incompliant with the target bit rate. But in the final phase, the two associated quantization parameter values stored differ only by One. That is, in the final phase a smallest compliant quantization parameter value and a next smaller, and therefore target-bit-rate-incompliant, quantization parameter value are stored and said smallest compliant quantization parameter value can be used in step RPO as fixed quantization parameter value for quantization of all yet-to-be-encoded closely resembling corresponding image blocks in images of the contiguous sequence.

The system is in the initial phase as long as all already encoded images of the current sequence of close resemblance resulted in coding costs of same compliance with the target bit rate, i.e. all coding costs are compliant with the target bit rate or all coding costs are incompliant.

During the initial phase, the stored coding cost is compared with the current coding cost caused by encoding of a current image of the current sequence of close resemblance. If the current coding cost exceeds the stored coding cost but not the target bit rate or if the current coding cost exceeds the target bit rate but exceeds it less than the stored coding cost, the stored coding cost and the stored quantization parameter value are overwritten and thus replaced by the current coding cost and the current quantization parameter value.

Once encoding of a current image of the current sequence results in current coding cost of different compliance than the coding cost stored, i.e. one and only one of the current and the stored coding cost is compliant with the target bit rate while the other is incompliant, the current coding cost and the quantization parameter value used for encoding of the current image is stored, too, and the optional intermediate phase or the final phase is entered.

The final phase is entered only in case the current quantization parameter value and the previously stored quantization parameter value differ by One, i.e. one is the next smaller of the other wherein the larger one corresponds to the smallest compliant quantization parameter value. This occurs, for instance, if quantization parameter value change is by one in the initial phase.

Otherwise, the optional intermediate phase is entered. During the optional intermediate phase, it is determined which of the stored coding costs has the same compliance with the target bit rate as the current coding cost. That is for current coding cost exceeding the target bit rate that one of the stored coding costs is determined which exceeds the target bit rate, too. And for current coding cost not exceeding the target bit rate the other one of the stored coding costs is determined. Then, the determined coding cost is compared with the current coding cost. If the current coding cost exceeds the determined coding cost but not the target bit rate or if the current coding cost exceeds the target bit rate but exceeds it less than the determined coding cost, the determined coding cost and the associated quantization parameter value are overwritten and thus replaced by the current coding cost and the current quantization parameter value.

That is, during the optional intermediate phase and in the final phase the stored quantization parameter values define an upper and a lower bound for the smallest compliant quantization parameter value. In the optional intermediate phase these bounds differ by more than one. Therefore, testing coding cost of quantization parameter values between the lower and the upper bound eventually lets the system converge into the final phase.

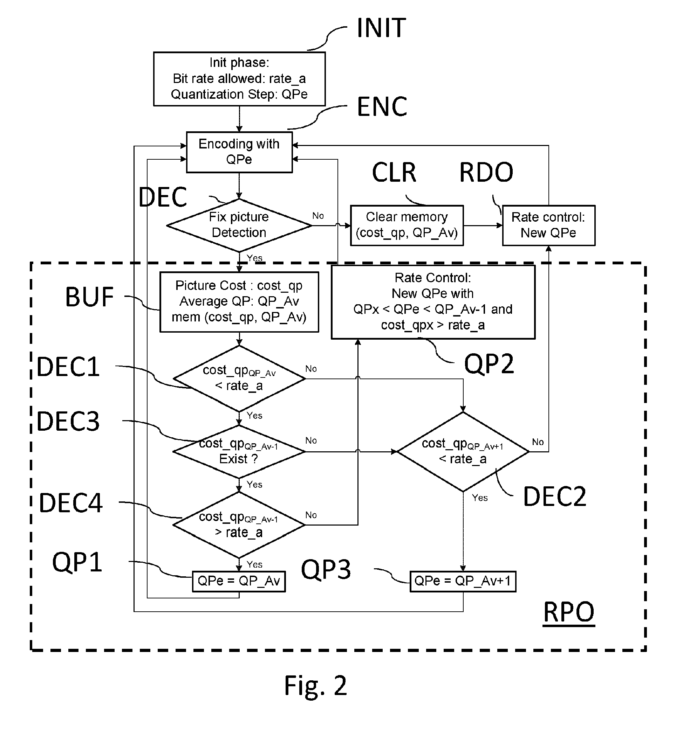

Flow chart of a different exemplary embodiment is depicted in Fig. 2. Here, step BUF of storage of current quantization parameter value and coding cost occurs after fix picture detection, i.e. detection close resemblance with a just previously encoded image. Step RPO as realized in this different exemplary embodiment comprises four decision steps DEC1, DEC2, DEC3, and DEC 4.

It is determined in step DEC1 whether coding cost of the current image exceeds the target bit rate.

It is determined in step DEC2 whether further coding cost exceeds the target bit rate in case the further coding cost exists, the further coding cost being associated with a next larger quantization parameter value by One larger than the current quantization parameter value. Step DEC2 is entered in case step DEC1 determined the current coding cost as exceeding the target bit rate.

If step DEC2 determines the further coding cost as not exceeding the target bit rate, the closely resembling image to-be-encoded-next is encoded using the next larger quantization parameter value.

If step DEC2 determines the further coding cost as exceeding the target bit rate, the closely resembling image to-be-encoded-next is encoded with a quantization parameter value determined according to prior art rate control.

It is determined in step DEC3 whether yet further coding cost exists, the yet further coding cost being associated with a next smaller quantization parameter value by one smaller than the current quantization parameter value. Step DEC3 is entered only in case step DEC1 determined the current coding cost as not exceeding the target bit rate.

It is determined in step DEC4 whether the yet further coding cost exceeds the target bit rate. Step DEC4 is entered only in case step DEC3 is entered and it is determined that the yet further coding cost exists.

If step DEC4 determines the yet further coding cost as exceeding the target bit rate, the closely resembling image to-be-encoded-next is encoded using the current quantization parameter value.

If step DEC4 determines the further coding cost as not exceeding the target bit rate, the closely resembling image to-be-encoded-next is encoded with a quantization parameter value smaller than the next smaller quantization parameter value. In an embodiment the quantization parameter value to-be-used for encoding of the closely resembling image to-be-encoded-next is further chosen larger than a largest known incompliant quantization parameter value for which is the known that it is the largest of all previously used quantization parameter values which resulted in incompliant coding costs.

Step DEC2 is entered, too, in case step DEC3 is entered and it is determined that the yet further coding cost does not exist.

In a further exemplary embodiment, the smallest compliant quantization parameter is determined by quantizing transform coefficients of a residual of an intra-predicted first image of a sequence of close resemblance with a first quantization parameter value and determining corresponding coding cost by encoding. From the determined coding cost, in turn, the content-dependent parameter of the rho-domain model is determined. Coding costs of the first image are then estimated for different quantization parameter values using the rho-domain model. Thus, the smallest compliant quantization parameter value is determined from the encoding of the first image and all other images of the sequence can be quantized with this value wherein the first image can be re-encoded using this value.

The different exemplary embodiments can be extended such that a database is built in which several quantization parameter values are stored, the stored quantization parameter values being smallest compliant quantization parameter values determined for different already encoded images.

Together with the stored quantization parameter values, there are stored the corresponding already encoded images. For encoding of a current image closely resembling one of the stored already encoded images the stored corresponding quantization parameter value can be used for quantization or as a starting point for search of an appropriate quantization parameter value.

Or, stored together with the stored quantization parameter values there are values characteristic of the vividness or complexity of the corresponding already encoded images. Then, the stored quantization parameter value corresponding to an already encoded image with same vividness or complexity as the current images is used for quantization or as a starting point for search of an appropriate quantization parameter value.

An exemplary embodiment of a device adapted for such encoding comprises an encoder and a means for intermediate storage of two different quantization parameter values used and corresponding coding costs, the encoder comprising means for quantization, wherein one of the stored quantization parameter values corresponds to coding cost compliant to the target bit rate and the other stored quantization parameter value corresponds to coding cost exceeding the target bit rate.

The exemplary embodiment of the device updates the storage means using a current quantization parameter value and current coding cost. In case the current coding cost do not exceed the target bit rate but is higher than the target bit rate compliant coding cost currently stored, said one of the quantization parameters and the corresponding coding cost are replaced by the current quantization parameter value and the current cost. At the same time the quantization parameter value is decreased as long as after decrease the quantization parameter value is still larger than the other stored quantization parameter values.

Similarly, in case the current coding cost exceed the target bit rate but is smaller than the target bit rate incompliant coding cost currently stored, said other quantization parameter and the corresponding coding cost are replaced by the current quantization parameter value and the current cost. At the same time the quantization parameter value is increased.

This replacement and quantization parameter value change continues until the stored quantization parameter values differ by one, i.e. the one quantization parameter value causing coding cost still compliant with the target bit rate is by one larger than the other quantization parameter value causing coding cost incompliant with the target bit rate. Then, said quantization parameter value causing compliant coding cost is used by the encoder for encoding of all images yet-to-be-encoded of the closely resembling images.

In addition or alternatively, the principle of the invention can be used at macro block level. That is, a sequence of closely resembling macro blocks at a same position in different images of the sequence is considered a sequence of closely resembling macroblock sized image blocks.

That is, a sequence of pictures is considered a mosaic of independent image block sequences, each independent image block sequence being a sequence of macroblock sized image blocks depicting macro blocks at a same position in the different pictures of the sequence. Then, quantization parameter values used for encoding of each of the sequences of macro-blocks is adjusted according to the invention in view of a macroblock target bit rate.

In another exemplary embodiment, the invention is used for determining an average quantization parameter value to-be-used in average over macro-blocks of an image of a contiguous sub-sequence of close resemblance.

## Claims

1. Method for intra-encoding of an image block, comprising using a processing means for
- quantizing a transform of a residual of an intra-prediction of the image block using a quantization parameter value and encoding the quantized transform, further using a processing means for
- determining that an already used quantization parameter value and corresponding coding cost are available in a storage means, the already used a quantization parameter value being already used for quantizing of a further image block close resembling the image block or having a same complexity as the image block and
- using the already used quantization parameter value, the corresponding coding cost and a target bit rate for determining the quantization parameter value.

2. Method of claim 1 further comprising determining whether the corresponding coding cost exceeds the target bit rate and determining the quantization parameter value not larger than the already used quantization parameter value in case the corresponding coding cost does not exceed the target bit rate and determining the quantization parameter value larger than the already used quantization parameter value in case the corresponding coding cost exceeds the target bit rate.

3. Method of claim 1 wherein a further already used quantization parameter value and corresponding further coding cost are further available and wherein, of said already used quantization parameter values available, one is corresponding to coding cost exceeding the target bit rate and the other is corresponding to coding cost not exceeding the target bit rate, the method further comprising determining the quantization parameter value larger than the one already used quantization parameter value and not larger than the other already used quantization parameter value.

4. Method of claim 3 wherein the already used quantization parameter value and the further already used quantization parameter value differ by one.

5. Method of claim 1-4 wherein the further image block is the image block.

6. Method of claim 1-5 further comprising storing the encoded quantized transform on a non-transitory storage medium.

7. Device for intra-encoding of an image block, comprising
- quantizing means for quantization of a transform of a residual of an intra-prediction of the image block using a quantization parameter value and encoding means for encoding the quantized transform, further comprising
- storage means for storing an already used quantization parameter value and corresponding coding cost, the already used a quantization parameter value being already used for quantizing of at least one further image block close resembling the image block or having a same complexity as the image block, and
- determining means for determining that the already used quantization parameter value and corresponding coding cost are stored wherein the device comprises processing means adapted for
- using the already used quantization parameter value, the corresponding coding cost and a target bit rate for determining the quantization parameter value.

8. Device of claim 7 wherein the storage means are adapted for storing a further already used quantization parameter value and corresponding further coding cost, the processing means being adapted for further using the further already used quantization parameter value and the further corresponding coding cost for determining the quantization parameter value.

9. Non-transitory storage medium having stored thereon intra-encoded image blocks intra-encoded and stored according to the method of claim 6.

10. Use of a processing device for decoding intra-encoded image blocks intra-encoded according to the method of one of claim 1-5.
